# EUROPÄISCHE PATENTSCHRIFT

(11) **EP 1 215 452 B1**
(45) Veröffentlichungstag und Bekanntmachung des Hinweises auf die Patenterteilung: **03.10.2007**
(21) Anmeldenummer: 01127918.9
(22) Anmeldetag: 23.11.2001
(51) Int. Cl.: F25B 43/00, F25B 40/00, F25B 31/00

(54) **Kältemittelmaschine mit Überhitzungstemperaturregelung vor dem Verdichter**
Refrigeration apparatus with superheat temperature control in front of the compressor
Appareil frigorifique avec régulation de la température de surchauffe à l'avant du compresseur

(30) Priorität: 16.12.2000 DE 10062948
(43) Veröffentlichungstag der Anmeldung: 19.06.2002
(73) Patentinhaber: Eaton Fluid Power GmbH, 76532 Baden-Baden (DE)
(72) Erfinder: Leisenheimer, Bert, Dr., 76185 Karlsruhe (DE); Ullrich, Holger, 76437 Rastatt (DE)
(74) Vertreter: Rüger, Barthelt & Abel Patentanwälte

(56) Entgegenhaltungen:
- EP-A- 0 672 875
- DE-A- 19 631 914
- DE-B- 1 227 036
- US-A- 2 568 711
- US-A- 2 783 621
- US-A- 3 201 950
- US-A- 3 600 904
- US-A- 4 068 493
- US-A- 4 617 804
- US-A- 5 771 703
- US-A- 6 155 075

## Beschreibung

Die Erfindung betrifft eine Kältemaschine, insbesondere für den Einsatz in Kraftfahrzeugen.

Moderne Kraftfahrzeuge werden häufig mit Klimaanlagen ausgestattet, die eine Kältemaschine enthalten. Die Kältemaschine dient der Kühlung von Luft, die der Fahrzeugkabine zugeführt oder in dieser umgewälzt wird. Der Kälteleistungsbedarf unterliegt dabei großen Schwankungen. Ist das Fahrzeug durch Sonneneinstrahlung über längere Zeit aufgeheizt worden und wird dann in Betrieb genommen, wird der Kältemaschine eine hohe Kälteleistung abverlangt. Bei geringen Umgebungstemperaturen muss die Kältemaschine hingegen lediglich mit geringer Leistung arbeiten. Die Kältemaschine benötigt demnach einen großen Regelbereich, wobei sie innerhalb des Regelbereichs bei jeder Leistungsanforderung stabil arbeiten muss.

Die Kältemaschinen weisen in der Regel einen Verdichter auf, der von dem Fahrzeugmotor angetrieben wird. Die Verdichterdrehzahl ergibt sich somit zwangsläufig aus der Motordrehzahl. Unabhängig von der jeweils aktuellen Verdichterdrehzahl muss die Kältemaschine stabil arbeiten.

In letzter Zeit werden zunehmend alternative Kältemittel untersucht, wie bspw. CO₂ (Kohlendioxid), Kohlenwasserstoffe oder andere. Die Anwendung solcher Kältemittel erfordert in den Kältemaschinen häufig einen ungewöhnlich hohen Betriebsdruck von bspw. über 20 Bar. Je nach Auslegung können Arbeitsdrücke von zwischen 70 und 150 Bar vorkommen. Die entsprechenden Verdichter sind für den erforderlichen Betriebsdruck ausgelegt und auch dazu eingerichtet, die erforderliche Druckdifferenz aufzubauen. Sie reagieren jedoch sehr empfindlich auf unzulässige Arbeitsbedingungen. Ein solcher Verdichter ist darauf eingerichtet, Kältemittel in Form von Dampf anzusaugen und auch als Dampf an den Kondensator abzugeben. Enthält der angesaugte Dampf Flüssigkeitströpfchen, können diese den Verdichter beschädigen. Bspw. kann das Einlassventil beschädigt werden. Dies gilt es in allen Betriebszuständen des Verdichters, d.h. sowohl bei hoher als auch bei niedriger Drehzahl und bei hoher Kälteleistung wie auch bei niedriger Kälteleistung, zu verhindern.

Die DE-AS 1 227 036 offenbart eine Kältemaschine mit einem Verdichter, einem Kondensator, einem Verdampfer und einem inneren Wärmetauscher. Zwischen dem Verdampfer und dem inneren Wärmetauscher ist ein U-förmiger Rohrabschnitt vorgesehen, über den dem Kältemitteldampfstrom Öl zugemischt werden soll. Dies dient der Schmierung des Verdichters. Das Öl ist mit dem Kältemittel in dem Verdampfer gemischt oder es schwimmt auf dem Kältemittel oder es liegt an dem Boden des Verdampfers - je nach Mischbarkeit und Dichteverhältnissen. Auf entsprechend angepasster Höhe zweigt von dem Verdampfer ein Ölkanal ab, über den dem U-förmigen Rohrabschnitt Öl und/oder eine Kältemittelölmischung zugeführt wird.

Der U-förmige Rohrabschnitt enthält Flüssigkeit und wird von dem Kältemitteldampf durchströmt. Hier kann es dazu kommen, dass Flüssigkeitspartikel mitgerissen werden. Diese können auch Kältemittel enthalten. Deshalb muss der innere Wärmetauscher in jedem Fall so stark dimensioniert sein, dass eine verdampfung der Fluidpartikel sichergestellt ist.

Daraus leitet sich die der Erfindung zugrundeliegende Aufgabe ab, eine betriebssichere Kältemaschine zu schaffen.

Diese Aufgabe wird durch eine Kältemaschine mit den Merkmalen des Patentanspruchs 1 gelöst. Außerdem wird mit dem Verfahren gemäß Anspruch 14 ein Verfahren angegeben, mit dem sich auf betriebssichere Weise Kälte erzeugen lässt.

Die erfindungsgemäße Kältemaschine weist einen Kältemittelkreislauf auf, der eine zu dem Verdichter führende Strecke enthält, in der das Kältemittel im Wesentlichen als Dampf vorliegt. Die hier vorgesehene Abscheideeinrichtung scheidet evtl. von dem Kältemitteldampf mitgeführte Flüssigkeit ab. Dies können Tröpfchen flüssigen Kältemittels sowie Öltröpfchen sein. Kältemitteltröpfchen können in der vom Verdampfer kommenden Leitung enthalten sein, wenn unvollständig verdampftes Kältemittel von dem aus dem Verdampfer kommenden Dampf mitgerissen wird oder wenn Kältemittel in der vom Verdampfer wegführenden Leitung rückkondensiert. Außerdem können Öltröpfchen enthalten sein. Der Kältemittelkreislauf kann außer dem Kältemittel eine definierte Ölmenge enthalten, die mit dem Kältemittel zirkuliert, um den Verdichter zu schmieren.

Der Verdampfer gibt Kältemittel-Nassdampf ab, der Flüssigkeitströpfchen mitführen kann. Diese werden von der Abscheideeinrichtung weitgehend, d.h. zum ganz überwiegenden Teil abgeschieden und in einem Vorratsraum gesammelt. Von der Abscheideeinrichtung wird das Kältemittel somit als weitgehend von flüssiger Phase befreiter Dampf zu dem Verdichter geleitet. In der Regel kann zwischen der Abscheideeinrichtung und dem Verdichter ein Wärmetauscher (sogenannter innerer Wärmetauscher) vorgesehen sein, der das zu dem Verdichter geleitete Kältemittel etwas erwärmt. Damit ist der an dem Verdichter ankommende Kältemitteldampf in jedem Fall trocken und enthält keine Flüssigkeitspartikel.

Bei der erfindungsgemäßen Kältemaschine ist zwischen dem Vorratsraum der Abscheideeinrichtung und der zu dem Verdichter führenden Strecke ein Einleitungskanal vorgesehen, der von einem Steuerorgan reguliert wird. Über den Einleitungskanal wird dem dampfförmigen Kältemittel kontrolliert und in tolerierbarer Menge flüssiges Kältemittel beigegeben, jedoch nur so viel, dass das beigegebene flüssige Kältemittel auf der verbleibenden Wegstrecke von der Einleitungsstelle bis zu dem Verdichter vollständig verdampft oder zumindest keine größeren Tropfen bildet. Vorzugsweise wird das Kältemittel vor dem oben genannten inneren Wärmetauscher in die Strecke geleitet, so dass es Gelegenheit hat, in dem inneren Wärmetauscher zu verdampfen. Zur Kontrolle dieses Vorgangs ist eine Steuereinrichtung vorgesehen, die über eine Sensoreinrichtung den Zustand des Kältemittels (insbesondere den Phasenzustand) vor dem Verdichter überwacht.

Die erfindungsgemäße Kältemaschine leitet das in der Abscheideeinrichtung abgeschiedene und in dem Vorratsraum gesammelte Kondensat, das in der Regel auch Öl enthält, wieder in die zu dem Verdichter führende Strecke ein. Damit wird sichergestellt, dass der angeschlossene Verdichter die erforderliche Ölmenge möglichst kontinuierlich und ständig erhält, und dass andererseits keine Flüssigkeitspartikel zu seiner Zerstörung führen können. Der Vorratsraum in der Abscheideeinrichtung wirkt als Puffer, der überschüssiges Kältemittel und Öl aufnimmt, wenn der ankommende Kältemitteldampf zu viel flüssige Phase enthält. In diesem Fall füllt sich der Vorratsraum in der Abscheideeinrichtung allmählich mit flüssigem Kältemittel und mit Öl, wobei über den Einleitungskanal nur die erforderlichen und zulässigen Mengen in die Strecke rückgeführt werden. Damit ist sichergestellt, dass der Verdichter nicht ungeschmiert läuft. Enthält der aus dem Verdampfer kommende Kältemitteldampf jedoch, bspw. wenn der Verdampfer sehr warme Luft abkühlen muss, keinerlei flüssige Phase und ist der Dampf schon trocken, wird in der Abscheideeinrichtung keine flüssige Phase abgeschieden. Jedoch kann dennoch aus dem Vorratsraum flüssiges Kältemittel und Öl in die Strecke gespeist werden, um einerseits den Vorratsraum wieder zu leeren und andererseits dem Verdichter auch Öl zuzuführen. Die erfindungsgemäße Kältemaschine kann mit einem geringen Ölvorrat auskommen als gewöhnlich, wenn dies gewünscht wird. Die Rückspeisung von Fluid aus dem Abscheider in die Strecke vermeidet nicht nur den Flüssigkeitszutritt zu dem Verdichter, sondern schafft darüber hinaus die Voraussetzung zur Stabilisierung des Betriebspunkts der Kältemaschine. Dies insbesondere hinsichtlich der Dampfqualität (Druck p, Temperatur T) des vom Verdichter angesaugten Dampfs.

Die erfindungsgemäße Kältemaschine kann somit in einem sehr weiten Betriebsbereich sicher betrieben werden, ohne dass übermäßiger Verschleiß oder Beschädigungen, insbesondere an dem Verdichter, auftreten.

Vorzugsweise ist zwischen der Abscheideeinrichtung und dem Verdichter eine Einrichtung zur geringfügigen Erwärmung des aus dem Verdampfer kommenden Kühlmittels vorgesehen. Diese Einrichtung kann bspw. ein innerer Wärmetauscher sein, in dem das vom Verdichter angesaugte Kältemittel mit dem von dem Kondensator abgegebenen, noch mindestens Umgebungstemperatur aufweisenden Kältemittel in Wärmeaustausch tritt, bevor es dem Expansionsventil zugeleitet wird. Damit erhält einerseits das Expansionsventil vorgekühltes Kältemittel, andererseits arbeitet der Kompressor insgesamt auf höherem Temperaturniveau, was wiederum insgesamt die Wirkungszahl der Kältemaschine erhöht.

Die Anwendung eines inneren Wärmetauschers ist außerdem insoweit von Vorteil, als dem von dem Abscheideeinrichtung kommenden Kältemitteldampf vor dem Wärmetauscher nennenswerte Kältemittel- und Ölmengen zugeführt werden können, die in dem Wärmetauscher eine innige Vermischung mit dem dampfförmigen Kältemittel und eine Erwärmung erfahren, so dass die Mischung an dem Eingang des Verdichters insgesamt dampfförmig ankommt. Prinzipiell wäre es allerdings auch möglich, das flüssige Kältemittel hinter dem Wärmetauscher in die Strecke einzuleiten, wenn die zu dem Verdichter führende Strecke für eine Rückverdampfung des flüssigen Kältemittel ausreichend ist.

Die Steuereinrichtung ist mit einer Sensoreinrichtung verbunden, die dazu dient, zu erfassen, ob das dem Verdichter zugeführte Kältemittel vollständig in gasförmiger Phase (d.h. als Dampf) vorliegt. Im einfachsten Fall enthält die Sensoreinrichtung einen Drucksensor und einen Temperatursensor, die beide an dem Eingang des Verdichters oder dem Ausgang des inneren Wärmetauschers (oder dazwischen) angeordnet sind. Wird als Kältemittel ein Stoff verwendet, der in flüssiger Phase elektrisch leitet, in Dampfform jedoch weniger oder nicht, kann ein Leitfähigkeitssensor als Sensoreinrichtung dienen. Die Steuereinrichtung enthält eine Tabelle oder ein Rechenmodul. Die Phasengrenzlinie im Druck-Temperatur-Diagramm, die die Druck- und Temperaturwerte beschreibt, bei denen die flüssige Phase an die gasförmige Phase grenzt, kann als Formel oder Tabelle hinterlegt sein. Das Rechenmodul kann die aktuell gemessenen Temperatur- und Druckwerte mit den Temperatur- und Druckwerten der Phasengrenzlinie vergleichen und somit feststellen, ob ein ausreichender Sicherheitsabstand von der flüssigen Phase eingehalten worden ist.

Hierauf können unterschiedliche Steuerstrategien aufbauen. Bspw. ist es möglich, die in dem Vorratsraum gehaltene Flüssigkeit (Kältemittel mit Öl) möglichst zügig in die Strecke einzuspeisen, um die Füllung des Vorratsraums möglichst gering zu halten. In einem solchen Fall reguliert die Steuereinrichtung die Einleitung von flüssigem Kältemittel in die Strecke möglichst so, dass gerade eben der erforderliche Sicherheitsabstand des Phasenzustands am Verdichtereingang von der Phasengrenzlinie eingehalten wird. Wird hingegen gewünscht, möglichst immer Flüssigkeit aus dem Vorratsraum in die Strecke einzuspeisen, damit der Verdichter möglichst selten oder nie mit nur geringen Ölanteil oder ohne Ölanteil an dem angesaugten Kältemittel betrieben wird, reguliert die Steuereinrichtung das Steuerorgan so, dass immer ein Minimalstrom von flüssigen Kältemittel in die Strecke eingeleitet wird, wobei dieser Minimalstrom nur in solchen Fällen auf noch geringere Werte reduziert wird, wenn dies der Zustand des Kältemitteldampfs nicht zulässt, d.h. wenn andernfalls eine zu große Annäherung an die Phasengrenzlinie erfolgen würde. Diese Steuerstrategie kann bedarfsweise dahingehend ergänzt werden, dass die Einleitung flüssigen Kältemittels in die Strecke dann erhöht wird, wenn es zulässig ist und der Füllstand des vorratsbehälters zu hoch ist. Die Zulässigkeit kann anhand des gemessenen Druck- und Temperaturwerts des Kältemitteldampfs am Verdichtereingang bestimmt werden. Eine weitere Steuerstrategie kann dahingehen, dem Abstand des Betriebspunkts von der Phasengrenzlinie immer konstant zu halten oder den Betriebspunkt selbst immer konstant zu halten. Letzteres beinhaltet auch die Konstanthaltung des Drucks, was ggfs. durch zusätzliche Steuerung des Expansionsventils ermöglicht wird.

Die Überwachung des Füllstands ist möglich, wenn zu der Sensoreinrichtung außer dem Temperatursensor und dem Drucksensor ein Füllstandssensor gehört, der den Füllstand in dem Vorratsraum deren Abscheideeinrichtung überwacht. Dadurch wird es darüber hinaus möglich, das Volumen des Vorratsraums so gering zu machen, dass lediglich ein Bruchteil des in dem Kältemittelkreislauf insgesamt vorhandenen Kältemittels von dem Vorratsraum in flüssiger Form aufgenommen werden kann. Dadurch lässt sich eine Abscheideeinrichtung schaffen, die klein und somit platzsparend ist. Außerdem lässt sie sich bei entsprechend geringer Abmessung mit nur geringen Schwierigkeiten für sehr hohe Berstdrücke auslegen, was insbesondere bei alternativen Kältemitteln wie CO₂ von Bedeutung ist.

Einzelheiten vorteilhafter Ausführungsformen der Erfindung sind Gegenstand von Unteransprüchen und lassen sich der Beschreibung oder der Zeichnung entnehmen.

In der Zeichnung ist ein Ausführungsbeispiel der Erfindung veranschaulicht. Es zeigen:
Fig. 1 eine erfindungsgemäße Kältemaschine in schematische Darstellung, und
Fig. 2 ein Phasendiagramm eines Kältemittels, in schematisierter Darstellung.

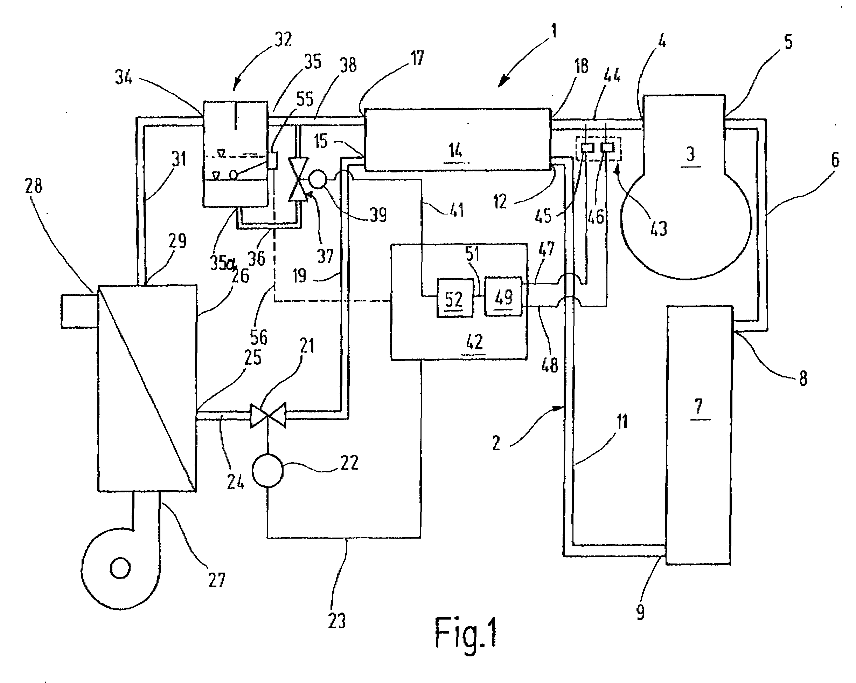

In Figur 1 ist eine Kältemaschine 1 eines Kraftfahrzeugs in ihren wesentlichen Komponenten schematisiert auf hohem Abstraktionsniveau veranschaulicht. Die Kältemaschine 1 weist einen Kältemittelkreislauf 2 auf, der über mehrere Komponenten führt. Zu diesem gehören ein Verdichter 3, der bspw. als Kolbenverdichter ausgeführt und von dem nicht weiter veranschaulichten Motor des Kraftfahrzeugs angetrieben ist.

Der Verdichter 3 weist einen Eingang 4, an dem er dampfförmiges Kältemittel ansaugt, und einen Ausgang 5, an dem er verdichtetes Kältemittel abgibt, auf. Von dem Ausgang 5 führt eine Leitung 6 verdichtetes Kältemittel zu einem Kondensator 7. Dieser erhält an seinem Eingang 8 verdichtetes und bei der Verdichtung adiabatisch erwärmtes Kältemittel, bspw. CO₂, Propan, Butan, R134a oder Ammoniak. Der Kondensator ist bspw. luftgekühlt. Er weist einen Ausgang 9 auf, an dem Kältemittel abgegeben wird, dessen Temperatur niedriger ist als an dem Ausgang 5 des Verdichters 3 und das flüssig ist.

Von dem Ausgang 9 führt eine Leitung 11 zu einem Eingang 12 eines inneren Wärmetauschers 14. Von dem Eingang 12 erstreckt sich ein Kanal durch den inneren Wärmetauscher 14 zu seinem Ausgang 15. Der innere Wärmetauscher 14 weist einen weiteren Kanal auf, der von einem Eingang 17 zu einem Ausgang 18 führt und mit dem erstgenannten Kanal zwischen dem Eingang 12 und dem Ausgang 15 in Wärmeaustausch steht.

Während der Ausgang 18 des Wärmetauschers 14 mit dem Eingang 4 des Verdichters 3 verbunden ist, führt der Ausgang 15 des Wärmetauschers 14 über eine Leitung 19 zu einem Expansionsventil 21. Dieses ist mit einer vorzugsweise elektrischen Stelleinrichtung 22 versehen, die dazu dient, das Expansionsventil 21 gemäß einem über eine Signalleitung 23 erhaltenen Steuersignal mehr oder weniger freizugeben und somit mehr oder weniger Kältemittel durchzulassen. Das Expansionsventil 21 ist ein Entspanrungsventil und wird so gesteuert, dass es das durchströmende Kältemittel drosselt und somit einen Druckabfall erzeugt.

Von dem Expansionsventil 21 ausgehend führt eine Leitung 24 zu einem Eingang 25 eines Verdampfers 26. Dieser stellt einen Wärmetauscher dar, in dem das Kältemittel mit abzukühlender Luft in Wärmeaustausch tritt. Der Verdampfer 26 weist dazu einen Lufteingang 27 und einen Kaltluftausgang 28 auf.

Aus dem hermetisch geschlossenen, Kältemittel enthaltenden Innenraum des Verdampfers 26 führt, ausgehend von einem Ausgang 29 eine Leitung 31 zu einem Flüssigkeitsabscheider 32. Dieser weist einen Innenraum 33 auf, der als Vorratsraum für flüssiges Kältemittel sowie eventuell mit abgeschiedenes Öl oder ein anderes Schmiermittel dient. Der Flüssigkeitsabscheider 32 weist einen Eingang 34 und einen Ausgang 35 auf, die beide oberhalb eines sich in dem Vorratsraum ausbildenden Flüssigkeitsspiegels angeordnet sind. Ein weiterer Anschluss führt als Ausgang 35a von dem Boden oder einer jedenfalls unter dem Flüssigkeitsspiegel gelegenen Stelle des Flüssigkeitsabscheiders 32 fort. An diesem Ausgang 35a ist eine einen Einleitungskanal bildende Leitung 36 angeschlossen, die zu einem Regulierventil 37 führt. Von diesem führt die Leitung 36 weiter zu einer Verbindungsleitung 38, die den Ausgang 36 des Flüssigkeitsabscheiders 32 mit dem Eingang 17 des Wärmetauschers 14 verbindet.

Das Regulierventil 37 weist eine elektrische Stelleeinrichtung 39, bspw. eine Motorstelleinrichtung auf, die über eine Signal- oder Steuerleitung 41 angesteuert ist. Die Stelleinrichtung 39 kann bspw. ein Stellmotor, ein Schrittmotor oder dergleichen sein und beeinflusst die Drosselung oder Öffnung des Regulierventils 37 entsprechend den empfangenen Stellimpulsen.

Sowohl die Stelleinrichtung 22 als auch die Stelleinrichtung 39 sind über die Leitungen 23 bzw. 41 an eine Steuereinrichtung 42 angeschlossen, die den Betrieb mindestens der Stelleinrichtung 39 sowie in der Regel auch den Betrieb der Stelleinrichtung 22 reguliert. Außerdem ist die Steuereinrichtung 42 mit einer Sensoreinrichtung 43 verbunden, die an einer Verbindungsleitung 34 angeordnet ist. Diese führt von dem Ausgang 18 des Wärmetauschers 14 zu dem Eingang 4 des Verdichters 3.

Die Sensoreinrichtung 43 beinhaltet wenigstens einen Temperatursensor 45 und einen Drucksensor 46, die die aktuelle Temperatur und den aktuellen Druck des Kältemittels in der Verbindungsleitung 44 messen. Der Temperatursensor 44 und der Drucksensor 46 geben über entsprechende Signalleitungen 47, 48 elektrische Signale an entsprechende Eingänge der Steuereinrichtung 42 ab, die die Temperatur und den Druck des Kühlfluids vor dem Eingang 4 des Verdichters 3 kennzeichnen.

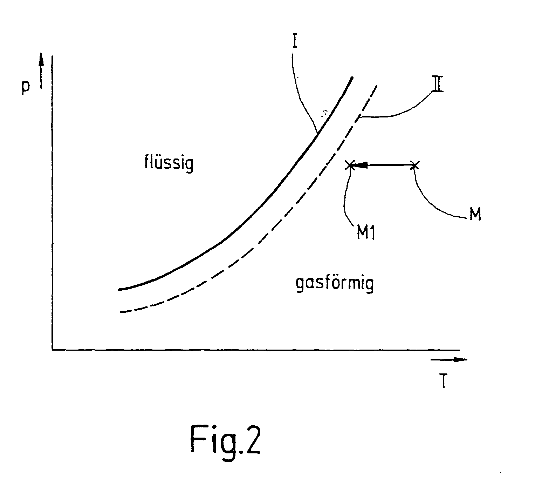

Die elektrische Steuereinrichtung 42 enthält ein-Steuermodul 49, das als Rechenmodul aufgebaut sein kann und das aus der gemessenen Temperatur und dem gemessenen Druck den Phasenzustand des Kühlmittels in der Verbindungsleitung 44 bestimmt und an seinem Ausgang 51 ein entsprechendes Signal abgibt. Dieses wird an ein Vergleichermodul 52 geleitet, das den aktuellen Phasenzustand mit einer Phasengrenzlinie gemäß Fig. 2 vergleicht. Ist der Abstand des aktuellen Phasenzustands von der Phasengrenzlinie ausreichend groß, gibt das Vergleichermodul 52 an die Stelleinrichtung 39 ein Öffnungssignal. Ist der Abstand jedoch kleiner als ein vorgegebener Mindestabstand, gibt das Vergleichermodul an die Stelleinrichtung 39 ein Schließsignal. Das Vergleichermodul 52 kann somit als Regeleinrichtung ausgebildet sein, die den Abstand des Betriebspunkts von der Phasengrenzlinie konstant hält.

Die insoweit beschriebene Kältemaschine 1, arbeitet wie folgt:

Die in Figur 1 veranschaulichte Kältemaschine wälzt in Betrieb das in dem geschlossenen Kältemittelkreislauf vorhandene Kältemittel ständig um. Das Kältemittel steht unter einem hohen Ruhedruck. Der Verdichter 3 baut an seiner Druckseite, d.h. an seinem Ausgang 5 einen erhöhten Kältemitteldruck auf. Dabei fördert er zugleich Kältemittel über den Ausgang 5 und die Leitung 6 zu dem Kondensator 7. Auch dieser steht bei zunächst noch geschlossenen Expansionsventil 21 unter erhöhtem Druck. Das Kältemittel wird bei dem Verdichtungsvorgang in dem Verdichter 3 adiabatisch erwärmt und erreicht dabei Temperaturen deutlich über der Umgebungstemperatur, z.B. 80°C. In dem Kondensator 7 kühlt es wieder unter diese Temperatur ab, z.B. auf 30°C, wobei es unter der Wirkung des erhöhten Drucks kondensiert.

In flüssigem Zustand gelangt das Kältemittel über die Leitung 11 zu dem Eingang 12 des inneren Wärmetauschers 14, in dem es im Gegenstrom mit aus dem Verdampfer 26 kommendem dampfförmigen Kältemittel in Wärmeaustausch tritt. Dieses ist kalt, so dass das flüssige Kältemittel in dem Wärmetauscher 14 weiter abkühlt und an dem Ausgang 15 mit eventuell unter die Umgebungstemperatur abgesenkter Temperatur austritt.

Das Kältemittel gelangt so zu dem Expansionsventil, das den Druck des flüssigen und abgekühlten Kältemittels reduziert. Das Kältemittel gelangt nun über die Leitung 24 in entspanntem Zustand in den Verdampfer 26. Hier nimmt das Kältemittel Umgebungswärme, insbesondere aber Wärme aus der den Wärmetauscher und Verdampfer 26 durchströmenden und abzukühlenden Luft auf, wobei es siedet.

Der entstehende kalte Dampf ist Nassdampf und gelangt über die Leitung 31 zu dem Flüssigkeitsabscheider 32. In dessen Vorratsraum 33 scheiden sich, auf Grund der hier wesentlich erniedrigten Strömungsgeschwindigkeit, mitgeführte flüssige Teile des Kältemittels ab und bilden einen Flüssigkeitsspiegel. Das den Flüssigkeitsabscheider 32 durchströmende Kältemittel steht mit dem Flüssigkeitsspiegel in Berührung und ist somit Nassdampf. Es befindet sich am Taupunkt. Dieses Kältemittel gelangt nun über die Verbindungsleitung 38 zu dem Eingang 17 des Wärmetauscher 14, in dem es von dem im Gegenstrom ankommenden warmen flüssigen Kältemittel über den Taupunkt hinaus erwärmt und somit an dem Ausgang 18 als trockener Dampf abgegeben wird.

Die Steuereinrichtung 42 erfasst den Zustand des Dampfs in der Verbindungsleitung 44 anhand der von der Sensoreinrichtung 43 gelieferten Signale. Das Steuermodul 49 errechnet aus der gemessenen Temperatur und dem gemessenen Druck den Abstand des aktuellen Zustandspunkts von der Taupunktlinie. Dies ist in Figur 2 veranschaulicht. Die aktuelle Temperatur und der aktuelle Druck sind als Messwert M gekennzeichnet. Ist der Abstand zu der in Figur 2 veranschaulichten Taupunktlinie I ausreichend groß, öffnet das Vergleichermodul 52 über die Stelleinrichtung 39 das Regulierventil 37 und lässt in dem Vorratsraum 33 befindliches flüssiges Kältemittel über die Leitung 36 in die Leitung 38 einströmen. Der Zustrom wird dabei auf relativ geringe Werte begrenzt. Die Begrenzung ist so festgelegt, dass kein übergroßer Flüssigkeitszustrom dazu führt, dass Flüssigkeit bis zu dem Eingang 4 vordringt.

Das über das Regulierventil 37 zuströmende flüssige Kühlmittel oder Gemisch aus Kühlmittel und Schmiermittel gelangt mit dem in der Leitung 38 geführten Nassdampf in den Wärmetauscher 14, der das Gemisch so weit erwärmt, dass an dem Ausgang 18 trocken gesättigter Kältemitteldampf ansteht. Dieser weist eine geringere Temperatur auf, als der ursprünglich an dem Ausgang 18 anstehende trockengesättigte Kältemitteldampf. Die Sensoreinrichtung 43 stellt somit einen geänderten Temperaturwert fest. Das Steuermodul 49 bestimmt den Messwert M1, wie in Figur 2 veranschaulicht. Dieser Messwert ist noch immer ausreichend weit von der Taupunktlinie I entfernt. Die zulässige Grenze, die nicht überschritten werden darf und von dem Vergleichermodul 52 eingehalten wird, ist in Figur 2 gestrichelt als Kurve II dargestellt.

Bei einer erweiterten Ausführungsform ist, wie in Figur 1 gestrichelt angedeutet ist, an dem Flüssigkeitsabscheider 32 ein Füllstandssensor 55 angeordnet, der über eine Signalleitung 56 mit der Steuereinrichtung 42 verbunden ist. Bei dieser Ausführungsform können weitere Steuerstrategien implementiert werden. Bspw. kann die Steuereinrichtung zusätzlich zu dem Phasenzustand in der Leitung 44 das Maß der Öffnung des Regulierventils 37 danach bemessen, wie hoch der Füllstand in dem Flüssigkeitsabscheider 32 ist. Bei hohen Füllständen kann evtl. eine größere Annäherung an die Sicherheitslinie II zugelassen werden, als bei niedrigen Füllständen.

Unabhängig davon, welche Regelstrategie im Einzelnen zugrundegelegt wird, wird in jedem Fall erreicht, dass das Kältemittel, das zu dem Eingang 4 des Verdichters 3 gelangt, frei von großen Flüssigkeitstropfen ist. Das Kältemittel kann deshalb mit dem Verdichter 3 mit sehr hohen Geschwindigkeiten zuströmen, ohne dass Gefahr besteht, das mitgeführte Flüssigkeitspartikel, bspw. das Einlassventil des Verdichters oder andere Maschinenelemente beschädigen. Es kann deshalb mit sehr engen Strömungsquerschnitten in der von der Verbindungsleitung 38, dem Wärmetauscher 14 und der Verbindungsleitung 44 gebildeten Strecke gearbeitet werden. Enge Strömungsquerschnitte gestatten wiederum eine hohe Druckfestigkeit der erforderlichen Leitungen mit relativ niedrigen Wandungsstärken zu schaffen. Damit eignet sich die beschriebene Lösung für die Kältemaschine 1 insbesondere für Hochdruck-Kältemaschinen.

Bei einer Kältemaschine ist vor dem Verdichter 3 ein Flüssigkeitsabscheider 32 angeordnet, der von dem Kältemittel mitgeführte Flüssigkeit in einem Vorratsraum 33 sammelt. Die Rückführung des flüssigen Kältemittels, das auch Öl enthalten kann, erfolgt über einen Einleitungskanal 36 in die zu dem Verdichter 3 führende Strecke. Über ein Regulierventil 37 steuert eine Steuereinrichtung 42 die Wiedereinleitung der Flüssigkeit so, dass der zu dem Verdichter 3 geleitete Dampf keine großen Flüssigkeitspartikel enthält.

## Patentansprüche

1. Kältemaschine (1), insbesondere für ein Kraftfahrzeug,
mit einem Kältemittelkreislauf (2), der wenigstens eine Strecke (31, 38, 14, 44) enthält, in der das Kältemittel im Wesentlichen als Dampf vorliegt,
mit einem Verdichter (3), der einen Eingang (4), an dem er Kältemittel als Dampf ansaugt, und einen Ausgang (5) aufweist, an dem er verdichtetes Kältemittel abgibt,
mit einem Kondensator (7), der einen Eingang (8) und einen Ausgang (9) aufweist, wobei sein Eingang (8) an den Ausgang (5) des Verdichters (3) angeschlossen ist,
mit einem inneren wärmetauscher (14), der einen Eingang (12) aufweist, der an den Ausgang (9) des Kondensators (7) angeschlossen ist, wobei sich von dem Eingang (12) des inneren Wärmetauschers (14) ein Kanal zu seinem Ausgang (15) erstreckt,
mit einem verdampfer (26), der zur Verdampfung des Kältemittels dient und einen Ausgang (29) sowie einen Eingang (26) aufweist, der ein Expansionsventil (21) an den Ausgang (15) des inneren Wärmetauschers (14) angeschlossen ist,
mit einer Abscheideeinrichtung (32), die in der Strecke (31, 38, 14, 44) angeordnet ist und einen Ausgang (35) sowie einen Eingang (34) aufweist, die beide oberhalb eines sich in einem Vorratsraum ausbildenden Flüssigkeitsspiegels angeordnet sind, wobei der Eingang (34) an den Ausgang (29) des Verdampfers angeschlossen ist, und wobei die Abscheideeinrichtung (32) den Vorratsraum aufweist, um in dem von dem Verdampfer abgegebenen Dampf in flüssiger Phase enthaltenes Kältemittel in dem Vorratsraum zurückzuhalten, und mit einem weiteren Ausgang (35a) versehen ist, der an einer Stelle unterhalb des Flüssigkeitsspiegels liegt,
wobei der Ausgang (35) der Abscheideeinrichtung (32) über eine Verbindungsleitung (38) an einen Eingang (17) des inneren Wärmetauschers (14) angeschlossen ist, von dem sich ein Kanal zu einem Ausgang (18) erstreckt, der mit dem Eingang (4) des Verdichters (3) verbunden ist,
mit einem Einleitungskanal (36), der von dem unterhalb des Flüssigkeitsspiegels liegenden Ausgang (35a) aus dem Vorratsraum in die Verbindungsleitung (38) führt, die den Ausgang (35) der Abscheideeinrichtung (32) mit dem Eingang (17) des Wärmetauschers (14) verbindet, um dem als Dampf vorliegenden Kältemittel in flüssiger Phase vorliegendes Kältemittel zuzuführen,
mit einem Steuerorgan (37), das in dem Einleitungskanal (36) angeordnet ist, um den Strom des in die Strecke (31, 38, 14, 44) eingeleiteten flüssigen Kältemittels zu regulieren,
mit einer Sensoreinrichtung (43), die einen Temperatursensor (45) und einen Drucksensor (46) umfasst, zur Erfassung des Zustands des Kältemittels in der Strecke (31, 38, 14, 44),
mit einer Steuereinrichtung (42), die mit der Sensoreinrichtung (43) und mit dem Steuerorgan (37) verbunden ist.

2. Kältemaschine nach Anspruch 1, **dadurch gekennzeichnet, dass** den Wärmetauscher (14) dem als Dampf vorliegenden Kältemittel Wärme zugeführt wird.

3. Kältemaschine nach Anspruch 2, **dadurch gekennzeichnet, dass** die Sensoreinrichtung (43) bezogen auf die Durchströmungsrichtung der Strecke (31, 38, 14, 44) hinter dem Wärmetauscher (14) angeordnet ist.

4. Kältemaschine nach Anspruch 1, **dadurch gekennzeichnet, dass** der Drucksensor (46) der Erfassung des aktuellen Drucks des als Dampf vorliegenden Kältemittels dient.

5. Kältemaschine nach Anspruch 1, **dadurch gekennzeichnet, dass** der Temperatursensor (45) zur Erfassung des als Dampf vorliegenden Kältemittels dient.

6. Kältemaschine nach Anspruch 1, **dadurch gekennzeichnet, dass** die Steuereinrichtung (42) das Steuerorgan (37) derart steuert, dass das Kältemittel an der Sensoreinrichtung (43) als trockener Dampf vorliegt.

7. Kältemaschine nach Anspruch 1, **dadurch gekennzeichnet, dass** die Steuereinrichtung (42) das Steuerorgan (37) derart steuert, dass das Kältemittel nach Durchlaufen der Strecke (31, 38, 14, 44) als trockener Dampf vorliegt.

8. Kältemaschine nach Anspruch 7 oder 8, **dadurch gekennzeichnet, dass** die Steuereinrichtung (42) das Steuerorgan (37) derart steuert, dass der Strom des über den Einleitungskanal (36) in die Strecke eingespeisten flüssigen Kältemittels geringer ist als ein maximal rückspeisbarer Kältemittelstrom.

9. Kältemaschine nach Anspruch 9, **dadurch gekennzeichnet, dass** der rückgespeiste Kältemittelstrom um ein vorgegebenes Maß geringer ist als der maximal rückspeisbare Kältemittelstrom.

10. Kältemaschine nach Anspruch 1, **dadurch gekennzeichnet, dass** das Expansionsventil (21) von der Steuereinrichtung (42) gesteuert ist.

11. Kältemaschine nach Anspruch 1, **dadurch gekennzeichnet, dass** zu der Sensoreinrichtung (43) ein Füllstandssensor (55) gehört, der den Füllstand in dem Vorratsraum (33) erfasst und der mit der Steuereinrichtung (42) verbunden ist.

12. Kältemaschine nach Anspruch 12, **dadurch gekennzeichnet, dass** die Steuereinrichtung (42) den Füllstand in dem Vorratsraum (33) überwacht und das Expansionsventil (21) drosselt, wenn ein vorgegebener Maximalfüllstand überschritten ist.

13. Verfahren zum Betrieb einer Kältemaschine (1), die einen Kondensator (7), einen Verdampfer (26), einen inneren Wärmetauscher (14) und einen Verdichter (3), aufweist, dem Kältemitteldampf zuzuführen ist, mit folgenden Maßnahmen:
während des Betriebs der Kältemaschine (1) wird an einer vor dem inneren wärmetauscher (14) und vor dem Verdichter (3) gelegenen Stelle mittels einer Abscheideeinrichtung (32) in dem Kältemitteldampf enthaltenes flüssiges Kältemittel abgeschieden,
der Phasenzustand des Kältemittels wird an einer vor dem Verdichter (3) gelegenen Stelle ständig überwacht, und
dem Kältemitteldampf wird vor inneren Wärmetauscher (14) flüssige Kältemittel dosiert in einer solchen Menge zugemischt, dass der Kältemitteldampf vor dem Verdichter (3) trocken ist.

14. Verfahren nach Anspruch 14, **dadurch gekennzeichnet, dass** der Kältemitteldampf nach Abscheidung der flüssigen Phase und vor Wiederbeimischung flüssigen Kältemittels erwärmt wird.

15. Verfahren nach Anspruch 14, **dadurch gekennzeichnet, dass** das abgeschiedene flüssige Kältemittel zwischengepuffert wird.

## Claims

1. A refrigeration apparatus (1), in particular for motor vehicles, having
a coolant circuit (2) containing at least one section (31, 38, 14, 44), in which the coolant is substantially present as a vapour,
a compressor (3) having an inlet (4), at which it draws in coolant as a vapour, and an outlet (5), at which it delivers compressed coolant,
a condenser (7) having an inlet (8) and an outlet (9), whereby its inlet (8) is connected to the outlet (5) of the compressor (3),
an internal heat exchanger (14) having an outlet (12), which is connected to the outlet (9) of the condenser, whereby a conduit extends from the inlet (12) of the internal heat exchanger (14) to its outlet (15),
an evaporator (26) serving for evaporation of the coolant and having an outlet (29) and an inlet (25), which is connected to an expansion valve (21) on the outlet (15) of the internal heat exchanger (14),
a collector device (32) disposed in the section (31, 38, 14, 44) and having an outlet (35) and an inlet (34), both of which are disposed above a liquid level forming in a reservoir, whereby the inlet (34) is connected to the outlet (29) of the evaporator, and whereby the collector device (32) has the reservoir for holding back, in said reservoir, the coolant contained in a liquid phase in the vapour delivered by the evaporator, and is provided with a further outlet (35a) located at a position below the liquid level,
whereby the outlet (35) of the collector device (32) is connected by way of a connecting line (38) to an inlet (17) of the internal heat exchanger (14), from which a conduit extends to an outlet (18) joined to the inlet (4) of the compressor (3),
an inlet conduit (36)leading from outlet (35a) located below the fluid level out of the reservoir into the connecting line (38) joining the outlet (35) of the collector device (32) to the inlet (17) of the heat exchanger (14) for supplying coolant present in the liquid phase to the coolant present as vapour,
a control member (37) disposed in the inlet conduit (36) for regulating the flow of the liquid coolant introduced into the section (31, 38, 14, 44),
a sensor device (43) comprising a temperature sensor (45) and a pressure sensor (46) for detecting the state of the coolant in the section (31, 38, 14, 44),
a control device (42) connected to the sensor device (43) and the control member (37).

2. A refrigeration apparatus according to claim 1, **characterised in that** heat is supplied to the coolant present as vapour by means of the heat exchanger (14).

3. A refrigeration apparatus according to claim 2, **characterised in that** the sensor device (43) is disposed downstream of the heat exchanger (14) in relation to the flow direction of the section (31, 38, 14, 44).

4. A refrigeration apparatus according to claim 1, **characterised in that** the pressure sensor (46) serves for detecting the current pressure of the coolant present as vapour.

5. A refrigeration apparatus according to claim 1, **characterised in that** the temperature sensor (45) serves for detecting the coolant present as vapour.

6. A refrigeration apparatus according to claim 1, **characterised in that** the control device (42) controls the control member (37) such that the coolant is present at the sensor device (43) as a dry vapour.

7. A refrigeration apparatus according to claim 1, **characterised in that** the control device (42) controls the control member (37) such that the coolant is present as a dry vapour after passing through the section (31, 38, 14, 44).

8. A refrigeration apparatus according to claim 7, **characterised in that** the control device (42) controls the control member (37) such that the flow of the liquid coolant fed into the section by way of the inlet conduit (36) is less than the maximum coolant flow that can be recirculated.

9. A refrigeration apparatus according to claim 8, **characterised in that** the recirculated coolant flow is less by a predetermined amount than the maximum coolant flow that can be recirculated.

10. A refrigeration apparatus according to claim 1, **characterised in that** the expansion valve (21) is controlled by the control device (42).

11. A refrigeration apparatus according to claim 1, **characterised in that** the sensor device (43) includes a level sensor (55) which detects the level in the reservoir (33) and is connected to the control device (42).

12. A refrigeration apparatus according to claim 11, **characterised in that** the control device (42) monitors the level in the reservoir (33) and throttles the expansion valve (21) if a predetermined maximum level is exceeded.

13. A method for operating a refrigeration apparatus (1) having a condenser (7), an evaporator (26), an internal heat exchanger (14) and a compressor (3) which is to be supplied with coolant vapour, comprising the following steps:
during operation of the refrigeration apparatus (1), liquid coolant contained in the coolant vapour is precipitated by means of a collector device (32) at a point located upstream of the internal heat exchanger (14) and upstream of the compressor (3),
the phase condition of the coolant is monitored continuously at a point located upstream of the compressor (3), and
liquid coolant is metered into the coolant vapour upstream of the internal heat exchanger (14) in a quantity such that the coolant vapour upstream of the compressor (3) is dry.

14. A method according to claim 13, **characterised in that** the coolant vapour is heated up after precipitation of the liquid phase and prior to the renewed admixture of liquid coolant.

15. A method according to claim 14, **characterised in that** the precipitated liquid coolant is intermediately buffered.

## Revendications

1. Machine frigorifique (1), en particulier pour un véhicule automobile,
avec un circuit de fluide frigorigène (2), contenant au moins une veine (31, 38, 14, 44), dans laquelle le fluide frigorigène se présente essentiellement sous forme de vapeur,
avec un compresseur (3), qui présente une entrée (4), à laquelle il aspire du fluide frigorigène sous forme de vapeur, et une sortie (5), à laquelle il fournit le fluide frigorigène comprimé,
avec un condenseur (7), présentant une entrée (8) et une sortie (9), son entrée (8) étant raccordée à la sortie (5) du compresseur (3),
avec un échangeur de chaleur (14), présentant une entrée (12) raccordée à la sortie (9) du condenseur (7), sachant qu'un canal allant vers sa sortie (15) s'étend depuis l'entrée (12) de l'échangeur de chaleur intérieur (14),
avec un évaporateur (26), servant à l'évaporation du fluide frigorigène et présentant une sortie (29), ainsi qu'une entrée (26) raccordée à la soupape d'expansion (21) montée à la sortie (15) de l'échangeur de chaleur intérieur (14),
avec un dispositif de séparation (32), disposé dans la veine (31, 38, 14, 44) et présentant une sortie (35) ainsi qu'une entrée (34), les deux étant disposées au-dessus d'un niveau de liquide se constituant dans une enceinte de stockage; ladite entrée (34) étant raccordée à la sortie (29) du compresseur, et le dispositif de séparation (32) présentant l'enceinte de stockage, pour retenir dans l'enceinte de stockage le fluide frigorigène se trouvant contenu en phase liquide dans la vapeur fournie par le compresseur, et étant muni d'une autre sortie (35a) placée en un emplacement situé au-dessous du niveau du liquide,
la sortie (35) du dispositif de séparation (32) étant raccordée, par une conduite de liaison (38), à une entrée (17) de l'échangeur de chaleur intérieur (14), d'où s'étend un canal allant à une sortie (18) reliée à l'entrée (4) du compresseur (3),
avec un canal d'introduction (36), menant de la sortie (35a) située au-dessous du niveau de liquide, depuis l'enceinte de stockage, dans la conduite de liaison (38) qui relie la sortie (35) du dispositif de séparation (32) à l'entrée (17) de l'échangeur de chaleur (14), pour amener au fluide frigorigène se présentant sous forme de vapeur du fluide frigorigène se présentant sous forme liquide,
avec un organe de commande (37) disposé dans le canal d'introduction (36), pour réguler le flux de fluide frigorigène liquide introduit dans la veine (31, 38, 14, 44),
avec un dispositif à capteur (43), comprenant un capteur de température (45) et un capteur de pression (46), pour détecter l'état du fluide frigorigène dans la veine (31, 38, 14, 44),
avec un dispositif de commande (42), relié au dispositif à capteur (43) et à l'organe de commande (37).

2. Machine frigorifique selon la revendication 1, **caractérisée en ce que** de la chaleur est amenée au fluide frigorigène se présentant sous forme de vapeur, à l'échangeur de chaleur (14).

3. Machine frigorifique selon la revendication 2, **caractérisée en ce que** le dispositif à capteur (43) est disposé derrière l'échangeur de chaleur (14), en se référant au sens de passage d'écoulement dans la veine (31, 38, 14, 44).

4. Machine frigorifique selon la revendication 1, **caractérisé en ce que** le capteur de pression (46) sert à détecter la pression actuelle du fluide frigorigène présent sous forme de vapeur.

5. Machine frigorifique selon la revendication 1, **caractérisée en ce que** le capteur de température (45) sert à détecter le fluide frigorigène se présentant sous forme de vapeur.

6. Machine frigorifique selon la revendication 1, **caractérisée en ce que** le dispositif de commande (42) commande l'organe de commande (37), de manière que le fluide frigorigène se présente au dispositif à capteur (43) sous forme de vapeur sèche.

7. Machine frigorifique selon la revendication 1, **caractérisé en ce que** le dispositif de commande (42) commande l'organe de commande (37) de manière que le fluide frigorigène, après passage par la veine (31, 38, 14, 44), se présente sous forme de vapeur sèche.

8. Machine frigorifique selon la revendication 6 ou 7, **caractérisée en ce que** le dispositif de commande (42) commande l'organe de commande (37) de manière que le flux de fluide frigorigène liquide injecté dans la veine par le canal d'introduction (36) soit inférieur à un flux de fluide frigorigène maximal réinjectable.

9. Machine frigorifique selon la revendication 8, **caractérisée en ce que** le flux de fluide frigorigène réinjecté est plus faible, d'une valeur prédéterminée, que le flux de fluide frigorigène maximal réinjectable.

10. Machine frigorifique selon la revendication 1, **caractérisée en ce que** la soupape d'expansion (21) est commandée par le dispositif de commande (42).

11. Machine frigorifique selon la revendication 1, **caractérisée en ce qu'**appartient à un dispositif à capteur (43) un capteur de remplissage (55), appréhendant le niveau de remplissage dans l'enceinte de stockage (33) et relié au dispositif de commande (42).

12. Machine frigorifique selon la revendication 11, **caractérisée en ce que** le dispositif de commande (42) surveille le niveau de remplissage dans l'enceinte de stockage (33) et provoque un étranglement par la soupape d'expansion (21), lorsqu'un niveau de remplissage maximal prédéterminé est dépassé.

13. Procédé de fonctionnement d'une machine frigorifique (1), présentant un condenseur (7), un évaporateur (26), un échangeur de chaleur intérieur (14) et un compresseur (3), auxquels est amenée de la vapeur de fluide frigorigène, comprenant les dispositions ci-après :
pendant le fonctionnement de la machine frigorifique (1), en un endroit situé en amont de l'échangeur de chaleur intérieur (14) et en amont du compresseur (3), au moyen d'un dispositif de séparation (32), on procède à la séparation du fluide frigorigène liquide contenu dans la vapeur de fluide frigorigène,
l'état de phase du fluide frigorigène est surveillé en permanence en un emplacement situé en amont du compresseur (3), et
on ajoute en mélange, de façon dosée, à la vapeur de fluide frigorigène, en amont de l'échangeur de chaleur intérieur (14), du fluide frigorigène liquide en une quantité telle que la vapeur de fluide frigorigène, en amont du compresseur (3), soit sèche.

14. Procédé selon la revendication 13, **caractérisé en ce que** la vapeur de fluide frigorigène, après séparation de la phase liquide et avant remise en mélange du fluide frigorigène liquide, est chauffée.

15. Procédé selon la revendication 13, **caractérisé en ce que** le fluide frigorigène liquide séparé est placé dans un stockage intermédiaire.
